# EUROPÄISCHE PATENTSCHRIFT

(11) **EP 3 306 891 B1**
(45) Veröffentlichungstag und Bekanntmachung des Hinweises auf die Patenterteilung: **23.06.2021**
(21) Anmeldenummer: 17195049.6
(22) Anmeldetag: 05.10.2017
(51) Int. Cl.: H04L 29/06, H04W 12/04, H04W 88/06, H04W 4/44, H04L 29/08, H04W 4/00

(54) **VERFAHREN ZUM KOMMUNIZIEREN UND KOMMUNIKATIONSMODUL FÜR EIN KRAFTFAHRZEUG**
METHOD OF COMMUNICATION AND COMMUNICATION MODULE FOR A VEHICLE
MÉTHODE DE COMMUNICATION ET MODULE DE COMMUNICATION POUR UN VÉHICULE

(30) Priorität: 06.10.2016 DE 102016118998
(43) Veröffentlichungstag der Anmeldung: 11.04.2018
(73) Patentinhaber: Bayerische Motoren Werke Aktiengesellschaft, 80809 München (DE); Deutsche Telekom AG, 53113 Bonn (DE)
(72) Erfinder: Zimmermann, Sebastian, 80331 München (DE); Gehrsitz, Thomas, 81377 München (DE); Schnieders, Dominik, 52078 Aachen (DE)
(74) Vertreter: 2SPL Patentanwälte PartG mbB

(56) Entgegenhaltungen:
- EP-A2- 0 756 397
- EP-A2- 0 989 712
- GB-A- 2 411 086
- WIRELESS APPLICATION FORUM: "WIRELESS APPLICATION PROTOCOL. WIRELESS TRANSPORT LAYER SECURITY SPECIFICATION", WAP WTLS, XX, XX, Nr. Version 11, 11. Februar 1999 (1999-02-11), Seiten 1-89, XP002217063,

## Beschreibung

### Technisches Gebiet

Ausführungsbeispiele der vorliegenden Erfindung befassen sich mit einem Verfahren zum Kommunizieren sowie mit einem Kommunikationsmodul für ein Kraftfahrzeug, mit denen es insbesondere möglich ist, verschlüsselt zu kommunizieren.

### Hintergrund

Zur Absicherung einer Kommunikation über eine Daten- oder Netzwerkschnittstelle werden die übertragenen Daten häufig verschlüsselt. Während bei asymmetrischen Verschlüsselungsverfahren typischerweise ein Schlüsselpaar bestehend aus einem öffentlichen und einem privaten Schlüssel einmal erzeugt wird und dieses unverändert verwendet wird, wird bei symmetrischen Verschlüsselungsverfahren der Schlüssel, also die Datensequenz, die zum Verschlüsseln verwendet wird, häufig regelmäßig erneuert und unter Umständen sogar für jede einzelne Kommunikation neu ausgehandelt. Während bei der asymmetrischen Verschlüsselung die mit einem Schlüssel des Paares verschlüsselte Nachricht nicht mit demselben Schlüssel wieder entschlüsselt werden kann, sondern nur mit dem anderen Schlüssel des Schlüsselpaares, wird bei der symmetrischen Verschlüsselung derselbe Schlüssel sowohl für die Verschlüsselung als auch für die Entschlüsselung verwendet. Der Vorteil der asymmetrischen Verfahren im Hinblick auf Schlüsselverteilung und Handhabung wird dadurch erkauft, dass bei asymmetrischen Verschlüsselungsverfahren üblicherweise deutlich größere Schlüssellängen erforderlich sind, um eine vergleichbare Sicherheit zu erzielen wie bei einem symmetrischen Verfahren.

Wenn beispielsweise Botschaften kurzen Inhalts verschlüsselt ausgetauscht werden sollen, kann die Datenmenge, die zum Aushandeln bzw. Austauschen eines Schlüssels anfällt, ähnlich groß sein, wie die Menge der verschlüsselt zu übertragenen Daten. Je nach Anwendungsfall kann diese sogar größer werden als die eigentliche Nutzdatenmenge selbst, was die Effizienz der Kommunikation vermindert.

Zum Beispiel wird im sogenannten Internet der Dinge (Internet of Things, IoT) in Zukunft eine hohe Anzahl an unterschiedlichen Geräten miteinander vernetzt werden, die jeweils untereinander geringe Datenmengen austauschen. Die Kommunikation zwischen diesen Geräten wird unter anderem auch als Machine Type Communication (MTC) bezeichnet, wobei die vernetzten Geräte oftmals nur sporadisch oder in periodischen Abständen überwiegend kurze Informationsblöcke austauschen. Werden sensible Daten übertragen, besteht auch beim Internet of Things die Notwendigkeit, die sensiblen Daten zu verschlüsseln, um die Sicherheit (security) und den Datenschutz (privacy) zu gewährleisten. Die zur Verschlüsselung verwendeten Schlüssel müssen folglich auch in diesen Anwendungen zwischen den Teilnehmern ausgetauscht werden, wodurch zusätzliche, in dem für geringe Datenmengen ausgelegten System signifikante Datenmengen verursacht werden.

Aus der EP 0 989 712 A2 ist ein Verfahren zum sicheren Übermitteln von Daten bekannt. Ein Server ist mit einem Client über eine Breitband- und eine Schmalbandverbindung verbunden. Über die Breitbandverbindung können Sicherheitsinformationen übermittelt werden, auf diesen basierend können Daten verschlüsselt werden und über den Schmalbandkanal übermittelt werden.

Aus der EP 0 75697 A2 ist eine portable Vorrichtung bekannt, die fähig ist mit einer Host-Vorrichtung über ein Kommunikationsnetzwerk zu kommunizieren. Dabei können ein Sicherheitsschlüssel oder Datencode über ein direktes Kommunikationsmittel ausgetauscht werden, sobald ein Schlüssel-Update-Mittel dies initiiert.

Aus der GB 2 411 086 A ist ein sicherer Kommunikationskanal zwischen einem mobilen Terminal A und einem mobilen Terminal B bekannt. Ein öffentlicher Schlüssel eines Terminals kann dem jeweils anderen Terminal über eine Verbindung zwischen einem Schlüsselaustausch-Server, mit dem die jeweiligen Terminals verbunden sind, mitgeteilt werden.

In einigen Anwendungen besteht somit die Notwendigkeit, Verfahren zum Kommunizieren effizienter zu gestalten.

### Zusammenfassung

Diese Notwendigkeit wird gemäß den Verfahren und Vorrichtungen der unabhängigen Patentansprüche erfüllt.

Gemäß einigen Ausführungsbeispielen umfasst ein Verfahren zum Kommunizieren ein Austauschen eines Schlüssels über eine erste Netzwerkschnittstelle sowie ein Verschlüsseln einer Kommunikation über eine zweite Netzwerkschnittstelle basierend auf dem Schlüssel. Dabei verhält sich die zweite Netzwerkschnittstelle bezüglich des Verbrauchs einer Ressource während der Kommunikation schlechter als die erste Netzwerkschnittstelle bezüglich des Verbrauchs der Ressource. Der Schlüssel wird über die erste Netzwerkschnittstelle unter Verwendung eines asymmetrischen Verschlüsselungsverfahrens ausgetauscht. Der ausgetauschte Schlüssel ist ein Schlüssel für eine symmetrische Verschlüsselung und die Kommunikation über die zweite Netzwerkschnittstelle wird symmetrisch verschlüsselt. Indem der Schlüssel über die erste Netzwerkschnittstelle ausgetauscht wird, deren Ressourcenverbrauch geringer ist als der der zweiten Netzwerkschnittstelle, über die darauf folgend eine verschlüsselte Kommunikation stattfindet, kann die Effizienz der Kommunikation gesteigert werden, da zumindest der Schlüsselaustausch über eine ressourcenschonende Verbindung bzw. Netzwerkschnittstelle stattfindet.

Gemäß einigen Ausführungsbeispielen ist die betrachtete Ressource die Kosten der Datenübertragung. Gemäß diesen Ausführungsbeispielen sind die Kosten zur Übertragung einer vorbestimmten Datenmenge über die zweite Netzwerkschnittstelle höher als die Kosten zur Übertragung derselben vorbestimmten Datenmenge über die erste Netzwerkschnittstelle.

Gemäß diesen Ausführungsbeispielen kann die zum Schlüsselaustausch erforderliche Datenmenge über die Schnittstelle mit den geringeren Kosten erfolgen und erst die verschlüsselte Kommunikation erfolgt über die Netzwerkschnittstelle mit den höheren Kosten, was insgesamt zu einer Kostenreduzierung führen kann.

Gemäß einigen Ausführungsbeispielen ist die betrachtete Ressource die maximale Datenrate, die über die Netzwerkschnittstellen erzielt werden kann. Gemäß diesen Ausführungsbeispielen ist die maximale Datenrate der zweiten Netzwerkschnittstelle geringer als die maximale Datenrate der ersten Netzwerkschnittstelle. Die Datenrate ist äquivalent zu der zum Austausch eines Datenpakets vorgegebener Größe erforderlichen Zeit. Der Schlüssel wird zunächst über die erste Netzwerkschnittstelle mit der höheren Datenrate ausgetauscht, die weniger Zeit zum Übertragen einer bestimmten Datenmenge benötigt, wohingegen die verschlüsselte Kommunikation darauf folgend über die Netzwerkschnittstelle mit der geringen maximalen Datenrate erfolgt, die eine längere Zeit zum Austausch derselben Datenmengen benötigt. Dies kann die Effizienz der verschlüsselten Kommunikation erhöhen, beispielsweise in Szenarien, in denen ein Energieverbrauch der ersten Netzwerkschnittstelle der höheren Datenrate höher ist als derjenige der zweiten Netzwerkschnittstelle. Steht beispielsweise die erste Netzwerkschnittstelle mit der hohen Datenrate nicht kontinuierlich zur Verfügung, kann ein Ausführungsbeispiel der hierin beschriebenen Erfindung die verschlüsselte Kommunikation erst ermöglichen, beispielsweise wenn die Datenrate der zweiten Netzwerkschnittstelle nicht ausreicht, um reproduzierbar und sicher einen Schlüssel auszutauschen.

Gemäß dem Verfahren wird ein Schlüssel für eine symmetrische Verschlüsselung ausgetauscht und die Kommunikation über die zweite Netzwerkschnittstelle wird symmetrisch verschlüsselt. Dies ermöglicht es, auf effiziente Art und Weise den Schlüssel über die Netzwerkschnittstelle des geringeren Ressourcenverbrauchs auszutauschen und daraufhin eine symmetrische Verschlüsselung über die zweite Netzwerkschnittstelle durchzuführen. Diese kann aufgrund des Verwendens eines symmetrischen Schlüssels mit hoher Sicherheit bei kurzen Nachrichten mit vergleichswiese geringer Codewortlänge erfolgen, was die bei der Kommunikation über die zweite Netzwerkschnittstelle verwendeten Ressourcen zusätzlich schont.

Gemäß einigen Ausführungsbeispielen wird die Kommunikation über die zweite Netzwerkschnittstelle mit dem über die erste Netzwerkschnittstelle ausgetauschten Schlüssel verschlüsselt, wohingegen bei anderen Ausführungsbeispielen zunächst ein von dem Schlüssel abgeleiteter Einmalschlüssel erzeugt wird und die Kommunikation daraufhin mit dem Einmalschlüssel verschlüsselt wird. Dies kann gemäß einigen Ausführungsbeispielen die Sicherheit weiter erhöhen, da selbst der vorab ausgetauschte Schlüssel nicht mehrfach verwendet wird, sondern stattdessen lediglich von diesem abgeleitete Einmalschlüssel für einen einzigen Verschlüsselungsvorgang bzw. eine einzige Kommunikationssitzung (session) verwendet werden. Die Einmalschlüssel können mittels beliebiger Verfahren von dem ausgetauschten Schlüssel abgeleitet werden.

Gemäß dem Verfahren wird der Schlüssel über die erste Netzwerkschnittstelle unter Verwendung eines asymmetrischen Verschlüsselungsverfahrens ausgetauscht. Dies kann es ermöglichen, zum einen eine einfache Verwaltbarkeit eines kryptographischen Systems zu gewährleisten, indem ein Schlüsselpaar von privaten und öffentlichen Schlüssel dazu verwendet wird, bereits das Austauschen des Schlüssels über die erste Netzwerkschnittstelle verschlüsselt zu ermöglichen. Der durch das asymmetrische Verschlüsselungsverfahren erhöhte Datenverbrauch schmälert die Effizienz des Kommunikationsverfahrens nicht nachhaltig, da für den Schlüsselaustausch die Netzwerkschnittstelle des geringen Ressourcenverbrauchs verwendet wird, wohingegen die darauffolgende verschlüsselte Kommunikation über die weniger ressourcensparende Netzwerkschnittstelle durchgeführt wird, die je nach Anwendungsszenario andere Vorteile aufweisen kann.

Gemäß dem Verfahren arbeitet die zweite Netzwerkschnittstelle konform zu einem der Standards Narrow Band Internet of Things (NB-IoT), LTE-M, LoRa, LoRaWAN oder Sigfox. Bei diesen Vernetzungstechnologien bzw. Standards für Netzwerkschnittstellen liegt der Fokus nicht auf einer hohen Datenrate, sondern auf einer energieeffizienten Kommunikation, die es gleichzeitig ermöglicht, eine hohe Anzahl von Kommunikationspartnern gleichzeitig zu bedienen. Beispielsweise liegt bei LTE-M die maximale Datenrate in einer Zelle bei 1 MBit/s, bei NB-IOT unter ca. 250 kBit/s. NB-IoT ist Beispielsweise ein vom "3rd Generation Partnership Project" (3GPP) verabschiedeter Standard mit Fokus auf unter anderem die Abdeckung innerhalb von Gebäuden, günstige Kosten, lange Batterielebensdauern und eine hohe mögliche Anzahl von Geräten. LTE-M wurde und wird ebenfalls von 3GPP für die Maschine-zu-Maschine Kommunikation entwickelt (M2M) und ist auch als zellulares LTE-M oder LTE-MTC bekannt. LoRaWAN ist eine Low Power Wide Area Network (LPWAN) Spezifikation der LoRa Allianz für batteriebetriebene schnurlose Geräte in regionalen, nationalen oder globalen Netzwerken. Sigfox ist ein proprietäres Protokoll.

Der Vorteil bei Verwendung dieser Technologien besteht also darin, dass zum einen für die verschlüsselte Kommunikation äußerst wenig Energie benötigt wird und dass viele Kommunikationsgeräte bzw. Kommunikationsmodule gleichzeitig kommunizieren können. Darüber hinaus haben einige dieser Kommunikationsprotokolle den Vorteil, dass sie Modulationsverfahren und Frequenzbänder als Ressourcen benutzen, die eine hohe Reichweite ermöglichen, die deutlich über der maximalen Reichweite von Kommunikationsstandards liegt, die auf eine hohe Datenrate optimiert sind. Bei Verwendung von Ausführungsbeispielen der hierin beschriebenen Erfindung kann trotz Datenratenlimitierung der zweiten Netzwerkschnittstelle eine verschlüsselte Kommunikation über die zweite Netzwerkschnittstelle erfolgen, auch wenn regelmäßig Schlüssel für die Kommunikation ausgetauscht werden müssen, ohne die Kapazität des Netzwerks durch den Schlüsselaustausch zu überlasten. Auch können, wenn aufgrund der Robustheit der Technologie für Daten, die über die zweite Netzwerkschnittstelle übertragen werden, höhere Kosten anfallen, als für Daten, die über die erste Netzwerkschnittstelle übertragen werden, Kosten optimiert werden, ohne auf die Möglichkeit der verschlüsselten Kommunikation verzichten zu müssen.

Um die Sicherheit zu erhöhen, wird gemäß einigen Verfahren der Schlüssel regelmäßig ausgetauscht, das heißt, der Schlüssel ist nur für ein endliches Zeitintervall gültig und es wird ein weiterer Schlüssel über die erste Netzwerkschnittstelle ausgetauscht, wenn ein vorbestimmter Bruchteil des endlichen Zeitintervalls abgelaufen ist.

Gemäß einigen Ausführungsbeispielen der Erfindung wird, wenn ergänzend oder alternativ zu einer verschlüsselten Kommunikation eine Authentifizierung eines Kommunikationspartners erforderlich ist, von dem ausgetauschten Schlüssel ein Einmalpasswort abgeleitet, das die einmalige sichere Authentifizierung des Kommunikationsmoduls, das ein Verfahren zum Kommunizieren gemäß der Erfindung durchführt, zu ermöglichen.

Gemäß einigen Ausführungsbeispielen erfolgt die Kommunikation innerhalb eines Kommunikationsmoduls für ein Kraftfahrzeug, das eine erste Netzwerkschnittstelle mit einer ersten maximalen Datenrate und eine zweite Netzwerkschnittstelle mit einer zweiten maximalen Datenrate umfasst, welche geringer ist als die erste maximale Datenrate. Ein Kommunikationscontroller innerhalb des Kommunikationsmoduls ist ausgebildet, um einen Schlüssel zum Verschlüsseln der Kommunikation über die erste Netzwerkschnittstelle zu empfangen und um eine Kommunikation über die zweite Netzwerkschnittstelle basierend auf dem Schlüssel zu verschlüsseln.

### Figurenkurzbeschreibung

Ausführungsbeispiele werden nachfolgend bezugnehmend auf die beiliegenden Figuren näher erläutert. Es zeigen:
Figur 1 zeigt ein Flussdiagramm eines Ausführungsbeispiels eines Verfahrens zum Kommunizieren;
Figur 2 zeigt schematisch eine Anwendung eines Verfahrens zum Kommunizieren mittels eines Kommunikationsmoduls innerhalb eines Kraftfahrzeugs;
Figur 3 zeigt ein Flussdiagramm eines Ausführungsbeispiels eines Verfahrens zum Kommunizieren, bei dem der Schlüssel eine endliche Gültigkeit besitzt; und
Figur 4 zeigt schematisch ein Blockdiagramm eines Ausführungsbeispiels eines Kommunikationsmoduls für ein Kraftfahrzeug.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas Anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas Anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts Anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

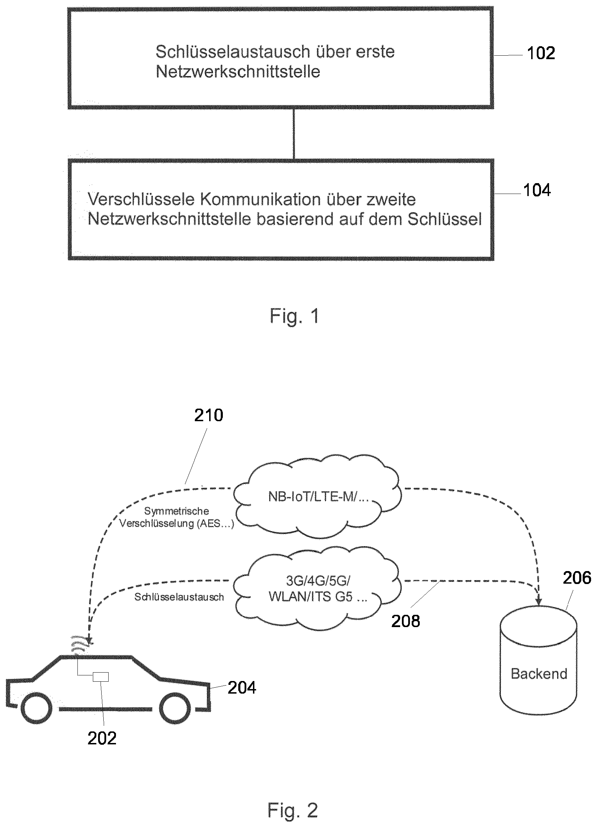

Figur 1 zeigt ein Flussdiagramm eines Ausführungsbeispiels eines Verfahrens zum Kommunizieren. Während eines Schlüsselaustauschschritts 102 wird ein Schlüssel über eine erste Netzwerkschnittstelle ausgetauscht, und während eines Kommunikationsschnitts 104 wird eine Kommunikation über eine zweite Netzwerkschnittstelle basierend auf dem Schlüssel verschlüsselt. Dabei ist die zweite Netzwerkschnittstelle bezüglich des Verbrauchs einer Ressource während der Kommunikation schlechter als die erste Netzwerkschnittstelle. Wie in den vorhergehenden Absätzen darlegt, kann als eine solche Ressource beispielsweise die Zeit betrachtet werden, die zum Versenden einer vorbestimmten Datenmenge über die betreffende Netzwerkschnittstelle verwendet wird. Als weiteres Beispiel für die Ressource können die Kosten betrachtet werden, die zur Übertragung einer vorbestimmten Datenmenge anfallen, sei es durch den Tarif eines Netzbetreibers, der die Infrastruktur zum Senden und Empfangen der Daten herstellt oder sei es, beispielsweise durch die Energiekosten, die anfallen, um die Daten über die unterschiedlichen Netzwerkschnittstellen zu übertragen.

Der Begriff "Netzwerkschnittstelle" heißt nicht notwendigerweise, dass es sich um getrennte Hardwareentitäten handeln muss. Vielmehr soll der Begriff "Netzwerkschnittstelle" so verstanden werden, dass unterschiedliche Netzwerkschnittstellen gemäß unterschiedlichen Kommunikationsprotokollen arbeiten, wohingegen die tatsächlich zur Implementierung des Protokolls verwendete Hardware, wie beispielsweise Antennen oder Radiatoren sowie ein Chip bzw. ein integrierter Schaltkreis, der zur Umsetzung der unterschiedlichen Kommunikationsprotokolle verwendet wird, identisch sein können.

Figur 2 zeigt schematisch die Anwendung des Verfahrens für die Kommunikation eines Kommunikationsmoduls 202 eines Kraftfahrzeugs 204 mit der Umgebung bzw. mit einem in Figur 2 als Backend bezeichneten Endgerät 206. Das Endgerät oder Backend kann jedwede Infrastruktur oder jedwedes Gerät sein, das über gegebenenfalls weitere vermittelnde Netzwerke von dem Kommunikationsmodul 202 bzw. von Applikationen, die sich des Kommunikationsmoduls 202 im Fahrzeug 204 bedienen, angesprochen werden kann. Beispielsweise kann das Backend einen Server eines Fahrzeugherstellers sein, mit dem das Fahrzeug 204 regelmäßig Informationen austauscht, die aufgrund der Verschlüsselung auch vertraulich sein können. Ein Kraftfahrzeug muss dabei nicht notwendigerweise ein Personenkraftwagen sein, wie in Figur 2 angedeutet. Vielmehr gibt es für alle Arten von Fahrzeugen sinnvolle Anwendungen. Ein Kraftfahrzeug kann beispielsweise auch ein LKW, ein Bus, ein Schiff, ein Flugzeug oder ein Hubschrauber sein, die sowohl bemannt als auch unbemannt sein können.

Von dem Kommunikationsmodul 202 wird über die erste Netzwerkschnittstelle, die ein erstes Netzwerkprotokoll verwendet bzw. unterstützt, der Schlüssel ausgetauscht. Der erste Kommunikationskanal 208, über den diese geschieht, ist in Figur 2 schematisch dargestellt und dieser kann beispielsweise eines der vom Third Generation Partnership Program (3GGP) standardisierten Datenprotokolle, beispielsweise 3G, 4G oder 5G verwenden. Gemäß weiteren Ausführungsbeispielen können selbstverständlich auch weitere breitbandige Datenverbindungen bzw. Datenprotokolle verwendet werden, wie beispielsweise eines der gemäß IEEE802.11 standardisierten Wireless LAN (WLAN) Protokolle oder eines der V2X Vernetzungstechnologien, wie ITS G5.

Nach dem Schlüsselaustausch wird über einen zweiten Kommunikationskanal 210 über die zweite Netzwerkschnittstelle eine verschlüsselte Kommunikation durchgeführt, deren Verschlüsselung auf dem ausgetauschten Schlüssel basiert. Beispielsweise in Fahrzeugen, in denen zukünftig neben der breitbandigen Kommunikation auch eine schmalbandige IOT-Kommunikation zur Verfügung stehen kann, kann diese Kommunikation konform zu einem der Standards LTE-M, Narrowband IoT, LoRA oder Sigfox erfolgen. Mit anderen Worten kann über eine breitbandige Kommunikationsschnittstelle ein symmetrischer Schlüssel zur Kommunikation über die IoT-Vernetzungstechnologie ausgehandelt und gegebenenfalls persistent im Fahrzeug sowie im Kommunikationspartner innerhalb des Backends abgelegt werden. Mit Hilfe eines solchen Verfahrens kann beispielsweise der Overhead durch den Schlüsselaustausch auf der zweiten Netzwerkschnittstelle vermieden werden, wodurch die darüber zu übertragende Datenmenge reduziert wird. Weiterhin wird die Latenz verringert, wenn nach einem schnellen Aushandeln des Schlüssels bereits mit der ersten Nachricht über die zweite Netzwerkschnittstelle verschlüsselt Nutzdaten übertragen werden können. Dabei kann beispielsweise die maximale Datenrate, die über die erste Netzwerkschnittstelle zur Verfügung steht, mehr als ein Zehnfaches der maximalen Datenrate der zweiten Netzwerkschnittstelle sein, die bei der Verwendung von IoT-Technologien beispielsweise geringer als 1,1 MBit/s sein kann.

Gemäß einigen Ausführungsbeispielen werden aus Sicherheitsgründen die Schlüssel regelmäßig neu ausgehandelt, das heißt, ein ausgetauschter Schlüssel ist nur für ein endliches Zeitintervall gültig. Je nach den Anforderungen an Sicherheit können die Schlüssel dabei beispielsweise wenige Minuten, einige Stunden, mehrere Tage oder sogar einige zehn, beispielsweise dreißig Tage gültig sein. Gemäß diesen Ausführungsbeispielen wird ein weiterer Schlüssel über die erste Netzwerkschnittstelle ausgetauscht, wenn ein vorbestimmter Bruchteil des endlichen Zeitintervalls, für das der Schlüssel gültig ist, abgelaufen ist. Dies kann insbesondere dann vorteilhaft sein, wenn die Kommunikation über die erste Netzwerkschnittstelle nicht kontinuierlich möglich ist. Dies kann beispielsweise bei der Verwendung der vorhergenannten 3GPP-Protokolle möglich sein, wenn das Fahrzeug in einer Garage parkt. Gemäß diesen Ausführungsbeispielen kann der möglicherweise unterbrochenen Erreichbarkeit der ersten Schnittstelle dadurch Rechnung getragen werden, dass bereits nach Ablauf eines vorbestimmten Zeitintervalls der Gültigkeit des Schlüssels, beispielsweise nach 60 %, 70 % oder 80 % dieses Zeitintervalls, versucht wird, über die erste Netzwerkschnittstelle einen erneuten Schlüssel auszutauschen. In diesen Fällen wird also ein neuer Schlüssel rechtzeitig vor Ablauf über die breitbandige Kommunikationsschnittstelle ausgehandelt und erneut persistent abgelegt. Je nach benötigter Sicherheit kann der symmetrische Schlüssel, der über die erste Netzwerkschnittstelle ausgehandelt bzw. ausgetauscht wurde, auch in einem Hardware-Security-Modul abgelegt werden, welches ein Auslesen des Schlüssels unmöglich macht.

Auch wenn die breitbandige Kommunikationsschnittstelle nicht durchgängig zur Verfügung steht, beispielsweise wenn die Wände eine Kommunikation verhindern, kann also gemäß diesen Ausführungsbeispielen sichergestellt werden, dass jederzeit ein Schlüssel für die verschlüsselte Kommunikation über die weniger ressourcenschonende zweite Netzwerkschnittstelle zur Verfügung steht. Durch die persistente Ablage des Schlüssels kann weiterhin die Kommunikation über den schmalbandigen Kommunikationskanal erfolgen, welcher aufgrund der verwendeten Technologien in vielen Situationen noch dann aufrechterhalten werden kann, wenn die breitbandige Kommunikation über die erste Netzwerkschnittstelle nicht mehr möglich ist.

Dabei gilt zu beachten, dass die Kommunikation über die erste Netzwerkschnittstelle zum Austausch des Schlüssels nicht zwingend von derselben Hardware durchgeführt werden muss, wie die Kommunikation über die zweite Netzwerkschnittstelle. Vielmehr ist es auch möglich, dass die erste Netzwerkschnittstelle eine Schnittstelle ist, die sich eines weiteren Datenrelais, beispielsweise eines mobilen Endgerätes oder Smartphones bedient, welches wiederum mit einem Netzwerk kommuniziert, um den Schlüssel über das Netzwerk zu beziehen und über die erste Netzwerkschnittstelle an das Kommunikationsmodul 202 weiterzugeben.

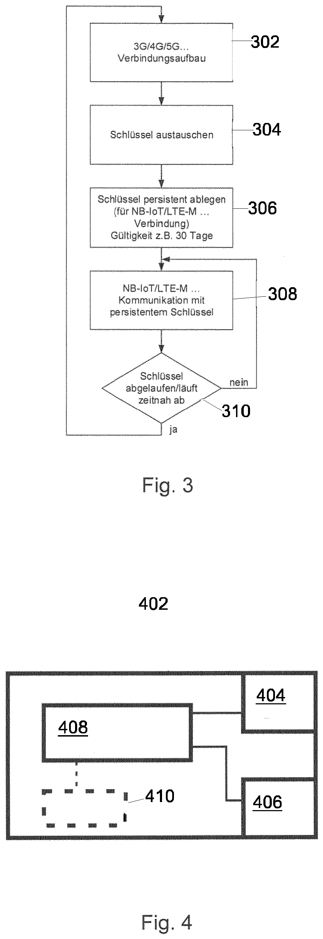

Figur 3 zeigt ein Flussdiagramm eines Verfahrens zum Kommunizieren, bei dem der über die erste Netzwerkschnittstelle ausgetauschte Schlüssel eine endliche Gültigkeit besitzt. Gemäß einem solchen Verfahren wird also zunächst in einem Verbindungsschritt 302 eine Verbindung zu einem Kommunikationspartner aufgebaut, mit dem verschlüsselt kommuniziert werden soll bzw. der den Schlüssel bereitstellen kann. In einem Austauschschritt 304 wird darauffolgend über die erste Netzwerkschnittstelle der Schlüssel ausgetauscht und der Schlüssel in einem Kommunikationsmodul, wie es nachfolgend in Figur 4 schematisch dargestellt ist, gespeichert. Nach diesem Speicherschritt 306 wird der Schlüssel in einem Datenaustauschschritt 308 verwendet, um über die zweite Netzwerkschnittstelle verschlüsselt zu kommunizieren. Darüber hinaus wird in einem Prüfschritt 310 regelmäßig überprüft, ob die Gültigkeit des Schlüssels bereits abgelaufen ist bzw. ob ein vorbestimmter Bruchteil des endlichen Zeitintervalls, für das der Schlüssel gültig ist, bereits abgelaufen ist. Ist dies nicht der Fall, wird die Kommunikation fortgesetzt. Ist dies der Fall, wird erneut eine Verbindung zu dem Kommunikationspartner aufgebaut, die einen Schlüssel bereitstellen kann, und das soeben beschriebene Kommunikationsverfahren beginnt erneut.

Figur 4 zeigt der Vollständigkeit halber schematisch ein Kommunikationsmodul 402, wie es beispielsweise in dem in Figur 2 schematisch dargestellten Kraftfahrzeug 204 verwendet werden kann. Das Kommunikationsmodul 402 umfasst eine erste Netzwerkschnittstelle 404, die eine erste maximale Datenrate aufweist. Eine zweite Netzwerkschnittstelle 406 des Kommunikationsmoduls weist eine zweite maximale Datenrate auf, die geringer ist, als die erste maximale Datenrate. Ein Kommunikationscontroller 408 in dem Kommunikationsmodul 402 dient dazu, den Schlüssel zum Verschlüsseln der Kommunikation über die erste Netzwerkschnittstelle 404 zu empfangen und die Kommunikation über die zweite Netzwerkschnittstelle 406 basierend auf dem Schlüssel zu verschlüsseln.

Gemäß einigen Ausführungsbeispielen kann das Kommunikationsmodul 402 ferner optional einen Speicher 410 aufweisen, der ausgebildet ist, um den Schlüssel zu speichern, so dass dieser für eine endliche Zeit für die Kommunikation verwendet werden kann.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbaren Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahingehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahingehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zum Kommunizieren in einem Kommunikationsmodul für ein Kraftfahrzeug, umfassend:
Austauschen eines Schlüssels (102; 304) über eine erste Netzwerkschnittstelle, wobei der Schlüssel unter Verwendung eines asymmetrischen Verschlüsselungsverfahrens ausgetauscht wird; und
Verschlüsseln einer Kommunikation (104; 308) über eine zweite Netzwerkschnittstelle basierend auf dem Schlüssel,
wobei die zweite Netzwerkschnittstelle bezüglich des Verbrauchs einer Ressource während der Kommunikation schlechter ist als die erste Netzwerkschnittstelle bezüglich des Verbrauchs der Ressource, wobei die Ressource Kosten zur Übertragung sind und die Kosten zur Übertragung einer vorbestimmten Datenmenge über die zweite Netzwerkschnittstelle höher sind als die Kosten zur Übertragung der vorbestimmten Datenmenge über die erste Netzwerkschnittstelle und/oder die Ressource eine maximale Datenrate ist und die maximale Datenrate der zweiten Netzwerkschnittstelle geringer ist als eine maximale Datenrate der ersten Netzwerkschnittstelle,
der Schlüssel ein Schlüssel für eine symmetrische Verschlüsselung ist und die Kommunikation über die zweite Netzwerkschnittstelle symmetrisch verschlüsselt wird,
wobei die erste Netzwerkschnittstelle sich eines Datenrelais bedient, das als Mobilgerät ausgebildet ist, wobei das Mobilgerät mit einem Netzwerk kommuniziert, um den Schlüssel über das Netzwerk zu beziehen und über die erste Netzwerkschnittstelle weiterzugeben, und
wobei über die zweite Netzwerkschnittstelle konform zu mindestens einem der Standards Narrowband IoT, LTE-M, LoRa und Sigfox kommuniziert wird.

2. Verfahren nach Anspruch 1, wobei die maximale Datenrate der ersten Netzwerkschnittstelle mehr als ein zehnfaches der maximalen Datenrate der zweiten Netzwerkschnittstelle ist.

3. Verfahren nach Anspruch 1 oder 2, wobei die maximale Datenrate der zweiten Netzwerkschnittstelle weniger als 1,1 Mbit/s ist.

4. Verfahren nach einem der vorhergehenden Ansprüche, wobei die Kommunikation mit dem Schlüssel verschlüsselt wird.

5. Verfahren nach einem der vorhergehenden Ansprüche, ferner umfassend:
Erzeugen eines von dem Schlüssel abgeleiteten Einmalschlüssels (One-Time-Pad); und
Verschlüsseln der Kommunikation über die zweite Netzwerkschnittstelle mit dem Einmalschlüssel

6. Verfahren nach einem der vorhergehenden Ansprüche, ferner umfassend:
Erzeugen eines von dem Schlüssel abgeleiteten Einmalpasswortes.

7. Verfahren nach einem der vorhergehenden Ansprüche, bei dem der Schlüssel nur für ein endliches Zeitintervall gültig ist.

8. Verfahren nach Anspruch 7, ferner umfassend:
Austauschen eines weiteren Schlüssels über die erste Netzwerkschnittstelle, wenn ein vorbestimmter Bruchteil des endlichen Zeitintervalls abgelaufen ist; und
Ersetzen des Schlüssels durch den weiteren Schlüssel.

9. Kommunikationsmodul (202; 402) für ein Kraftfahrzeug (204), umfassend:
eine erste Netzwerkschnittstelle (404) mit einer ersten maximalen Datenrate;
eine zweite Netzwerkschnittstelle (406) mit einer zweiten maximalen Datenrate, welche geringer ist, als die erste maximale Datenrate;
einem Kommunikationskontroller (408), der ausgebildet ist, um
einen Schlüssel zum Verschlüsseln einer Kommunikation über die erste Netzwerkschnittstelle (404) unter Verwendung eines asymmetrischen Verschlüsselungsverfahrens zu empfangen, wobei der Schlüssel ein Schlüssel für eine symmetrische Verschlüsselung ist;
eine Kommunikation über die zweite Netzwerkschnittstelle (406) basierend auf dem Schlüssel zu verschlüsseln, wobei die Kommunikation über die zweite Netzwerkschnittstelle symmetrisch verschlüsselt wird,
wobei die erste Netzwerkschnittstelle (404) sich eines Datenrelais bedient, das als Mobilgerät ausgebildet ist, wobei das Mobilgerät mit einem Netzwerk kommuniziert, um den Schlüssel über das Netzwerk zu beziehen und über die erste Netzwerkschnittstelle (404) weiterzugeben, und
wobei die zweite Netzwerkschnittstelle ausgebildet ist, um konform mit zumindest einem der Standards Narrowband IoT, LTE-M, LoRa und Sigfox zu kommunizieren.

10. Das Kommunikationsmodul (402) nach Anspruch 9, ferner umfassend:
einen Speicher (410), der ausgebildet ist, den Schlüssel zu speichern.

11. Kraftfahrzeug (204) mit einem Kommunikationsmodul (202) nach einem der Ansprüche 9 und 10.

12. Computerprogramm mit einem Programmcode, der ausgebildet ist, ein Verfahren nach einem Ansprüche 1 bis 8 durchzuführen, wenn der Programmcode auf einer programmierbaren Hardwarekomponente ausgeführt wird.

## Claims

1. A method of communicating in a communication module for a motor vehicle, comprising:
Exchanging a key (102; 304) via a first network interface, wherein the key is exchanged using an asymmetric encryption method; and
Encrypting a communication (104; 308) via a second network interface based on the key,
wherein the second network interface in terms of the consumption of a resource during the communication is worse than the first network interface in terms of the consumption of the resource, wherein the resource is a cost to transmit and the cost to transmit a predetermined amount of data via the second network interface is higher than the cost to transmit the predetermined amount of data via the first network interface, and/or the resource is a maximum data rate and the maximum data rate of the second network interface is less than a maximum data rate of the first network interface,
the key is a symmetric encryption key and the communication via the second network interface is symmetrically encrypted,
wherein the first network interface makes use of a data relay configured as a mobile device, the mobile device communicating with a network to obtain the key via the network and to pass it on via the first network interface, and
wherein the second network interface is used to communicate in conformity with at least one of Narrowband IoT, LTE-M, LoRa and Sigfox standards.

2. The method of claim 1, wherein the maximum data rate of the first network interface is more than ten times the maximum data rate of the second network interface.

3. The method of claim 1 or 2, wherein the maximum data rate of the second network interface is less than 1.1 Mbit/s.

4. The method according to any one of the preceding claims, wherein the communication is encrypted with the key.

5. The method of any one of the preceding claims, further comprising:
Generating a one-time key derived from the key (one-time pad); and
Encrypting the communication via the second network interface with the one-time key.

6. The method of any one of the preceding claims, further comprising:
Generating a one-time password derived from the key.

7. The method of any one of the preceding claims, wherein the key is valid only for a finite time interval.

8. The method of claim 7, further comprising:
Exchanging a further key via the first network interface, when a predetermined fraction of the finite time interval has elapsed; and
Replacing the key with the other key.

9. A communication module (202; 402) for a motor vehicle (204), comprising:
a first network interface (404) with a first maximum data rate;
a second network interface (406) with a second maximum data rate which is less than the first maximum data rate;
a communication controller (408) configured to
receive a key for encrypting a communication via the first network interface (404) using an asymmetric encryption method,
wherein the key is a symmetric encryption key;
encrypt a communication via the second network interface (406) based on the key, wherein the communication via the second network interface is symmetrically encrypted,
wherein the first network interface (404) makes use of a data relay configured as a mobile device, the mobile device communicating with a network to obtain the key via the network and to pass it on via the first network interface (404), and
wherein the second network interface is configured to communicate in conformity with at least one of Narrowband IoT, LTE-M, LoRa, and Sigfox standards.

10. The communication module (402) of claim 9, further comprising:
a memory (410) configured to store the key.

11. A motor vehicle (204) having a communication module (202) according to any one of claims 9 and 10.

12. A computer program comprising a program code configured to perform a method of any one of claims 1 to 8, when the program code is executed on a programmable hardware component.

## Revendications

1. Procédé de communication dans un module de communication pour un véhicule automobile, comprenant le fait de :
échanger une clé (102 ; 304) via une première interface réseau, la clé étant échangée à l'aide d'un procédé de chiffrage asymétrique ; et
chiffrer une communication (104 ; 308) via une deuxième interface réseau sur la base de la clé,
la deuxième interface réseau étant pire en termes de la consommation d'une ressource pendant la communication que la première interface réseau en termes de la consommation de la ressource, la ressource étant des coûts de transmission et les coûts de transmission d'une quantité prédéterminée de données via la deuxième interface réseau étant plus élevés que les coûts de transmission de la quantité prédéterminée de données via la première interface réseau, et/ou la ressource étant un débit de données maximal et le débit de données maximal de la deuxième interface réseau étant inférieur à un débit de données maximal de la première interface réseau,
la clé étant une clé pour un chiffrage symétrique et la communication étant chiffrée via la deuxième interface réseau,
la première interface réseau se servant d'un relais de données qui est configuré comme appareil mobile, l'appareil mobile communiquant avec un réseau pour obtenir la clé via le réseau et pour la transmettre via la première interface réseau, et
la deuxième interface réseau étant utilisée pour la communication conformément à au moins l'une des normes IoT à bande étroite, LTE-M, LoRa et Sigfox.

2. Procédé selon la revendication 1, le débit de données maximal de la première interface réseau étant plus de dix fois le débit de données maximal de la deuxième interface réseau.

3. Procédé selon la revendication 1 ou 2, le débit de données maximal de la deuxième interface réseau étant inférieur à 1,1 Mbit/s.

4. Procédé selon l'une des revendications précédentes, la communication étant chiffrée avec la clé.

5. Procédé selon l'une des revendications précédentes, comprenant en outre le fait de :
générer une clé à usage unique dérivée de la clé (masque jetable) ; et
chiffrer la communication via la deuxième interface réseau avec la clé à usage unique.

6. Procédé selon l'une des revendications précédentes, comprenant en outre le fait de :
générer un mot de passe à usage unique dérivé de la clé.

7. Procédé selon l'une des revendications précédentes, la clé n'étant valable que pendant un intervalle de temps fini.

8. Procédé selon la revendication 7, comprenant en outre le fait de :
échanger une autre clé via la première interface réseau lorsqu'une fraction prédéterminée de l'intervalle de temps fini a expirée ;
remplacer la clé par l'autre clé.

9. Module de communication (202 ; 402) pour un véhicule automobile (204), comprenant :
une première interface réseau (404) ayant un premier débit de données maximal ;
une deuxième interface réseau (406) ayant un deuxième débit de données maximal qui est inférieur au premier débit de données maximal ;
un contrôleur de communication (408) configuré pour
recevoir une clé pour chiffrer une communication via la première interface réseau (404) à l'aide d'un procédé de chiffrage asymétrique,
la clé étant une clé pour un chiffrage symétrique ;
chiffrer une communication via la deuxième interface réseau (406) sur la base de la clé, la communication étant chiffrée via la deuxième interface réseau,
la première interface réseau (404) se servant d'un relais de données qui est configuré comme appareil mobile, l'appareil mobile communiquant avec un réseau pour obtenir la clé via le réseau et pour la transmettre via la première interface réseau (404),
la deuxième interface réseau étant configurée pour communiquer conformément à au moins l'une des normes IoT à bande étroite, LTE-M, LoRa et Sigfox.

10. Module de communication (402) selon la revendication 9, comprenant en outre :
une mémoire (410) configurée pour stocker la clé.

11. Véhicule automobile (204) avec un module de communication (202) selon l'une des revendications 9 ou 10.

12. Programme d'ordinateur présentant un code de programme configuré pour réaliser un procédé selon l'une des revendications 1 à 8 lorsque le code de programme est exécuté sur un composant matériel programmable.
